# EUROPÄISCHE PATENTSCHRIFT

(11) **EP 0 656 534 B1**
(45) Veröffentlichungstag und Bekanntmachung des Hinweises auf die Patenterteilung: **12.05.1999**
(21) Anmeldenummer: 94118858.3
(22) Anmeldetag: 30.11.1994
(51) Int. Cl.: G01M 3/28

(54) **Leitungsüberwachungsgerät**
Canalisation monitoring means
Appareil de surveillance de conduite

(30) Priorität: 03.12.1993 DE 9318508 U
(43) Veröffentlichungstag der Anmeldung: 07.06.1995
(73) Patentinhaber: Haubold, Gert, D-84051 Essenbach/Ahrain (DE)
(72) Erfinder: Haubold, Gert, D-84051 Essenbach/Ahrain (DE)
(74) Vertreter: Riederer Freiherr von Paar zu Schönau, Anton

(56) Entgegenhaltungen:
- DE-A- 2 637 560

## Beschreibung

Die Erfindung betrifft ein Leitungsüberwachungsgerät insbesondere einer Heizölanlage für flüssigkeitsführende Leitungen, die von einem mit Flüssigkeit gefüllten Tank zu einem Verbraucher führen, mit: einer Alarmeinheit zur Signalisierung eines Lecks in den Leitungen oder einer Fehlfunktion des Leitungsüberwachungsgeräts; einer Meßeinrichtung, die das Leck feststellt und ein erstes Steuersignal an die Alarmeinheit liefert; einem im wesentlichen geschlossenen Zwischenbehälter für die Flüssigkeit, an dessen Eingangsöffnung ein zum Tank führender erster Leitungsabschnitt und an dessen Ausgangsöffnung ein zum Verbraucher, führender zweiter Leitungsabschnitt angeschlossen sind; gegebenenfalls einem Ventil im Bereich des tankseitigen Endes des ersten Leitungsabschnitts; und einer Vakuumpumpe, deren Ansauganschluß im über dem Flüssigkeitsspiegel verbleibenden Raum, der von einer Luftblase ausgefüllt ist, des Zwischenbehälters liegt; wobei die Meßeinrichtung eine Einrichtung zur Ermittlung einer Druck- und/oder Volumen-Zustandsänderung der Luftblase im Zwischenbehälter ist und in Abhängigkeit vom Zustand der Luftblase ein Steuersignal an die Vakuumpumpe zur Gegensteuerung gegen die Zustandsänderung liefert. Ein solches Leitungsüberwachungsgerät ist aus der DE-A-2637560 bekannt.

Es sind Leitungsüberwachungsgeräte bekannt, die die z. B. im Erdreich verlegten, zwischen einem Heizöltank und einem ölbrenner verlaufenden Leitungen überwachen. Aus Sicherheitsgründen können doppelwandige Leitungen verwendet werden, wobei zwischen den beiden Wänden ein Unterdruck erzeugt wird, der überwacht wird. Sobald eine Wandung defekt ist, steigt der Druck zwischen den beiden Wänden und eine Alarmeinheit zeigt das Auftreten eines Lecks an. Gegenwärtige Ölbrenneranlagen verwenden eine Ölansaugpumpe, die über eine Saugleitung und über eine Rückführleitung mit dem Tank verbunden ist. Ältere oder neue einfachere Anlagen weisen demgegenüber nur eine einzige einwandige Leitung zwischen dem Tank und dem Verbraucher auf. Es wäre erforderlich, die Schadensfreiheit auch einer solchen einwandigen Leitung während des normalen Betriebs ununterbrochen zu überwachen, das Auftreten eines Lecks zu signalisieren und gleichzeitig das Auslaufen von schädlichen Flüssigkeiten im Havariefall zu vermeiden. Dies wäre möglich, indem zur Erfüllung der Sicherheitsanforderungen größere Baumaßnahmen eingeleitet und neue Leitungen verlegt werden. Nach dem eingangs genannten Stand der Technik (DE-A-2637560) soll die Überwachung mit Hilfe eines in die Leitung zum Ölbrenner einbezogenen Unterdruck-Zwischenbehälters, dessen Innendruck beobachtet wird, durchgeführt werden. Am Fuß der aus dem Tank absaugenden Leitung sitzt ein Fußventil. Dieses Fußventil verhindert nicht das Aussickern von Öl bei bestimmten Leck-Stellen und beeinträchtigt aufgrund undefinierter Schaltpunkte das Betriebsverhalten des Leitungsüberwachungsgeräts.

Durch die Erfindung sollen flüssigkeitsführende Leitungen unter Betriebsbedingungen ununterbrochen einwandfrei überwachbar sein, auch wenn einwandige Leitungen verwendet werden, vorzugsweise ohne daß die Gefahr des Auslaufens der Flüssigkeit beim Auftreten eines Lecks besteht.

Dies wird durch die in den Ansprüchen 1 und 2 gekennzeichnete Erfindung erreicht. Der Zwischenbehälter ist vorteilhafterweise ein unter Unterdruck gehaltener kleiner Speicher in der Nähe des Verbrauchers. Sowohl die Verwendung des Ventils mit den definierten Schalteigenschaften, als auch die Ergänzung der Druckmessung durch eine Pegelmessung im Zwischenbehälter, insbesondere aber die gleichzeitige Anwendung beider Maßnahmen ermöglichen die Einstellung genau justierter Schaltpunkte des Überwachungsgeräts und damit eine hohe Fehlersicherheit, und zwar auch in Fällen, in denen bei einwandigen Leitungsinstallationen das Überwachungsgerät erst nachgerüstet worden ist.

Die Zustandsänderung kann insbesondere eine isotherme Zustandsänderung der Luftblase sein. Das Volumen der im Zwischenbehälter eingeschlossenen Luftblase und der Druck können schwanken. Die Meßeinrichtung hierfür soll sich bevorzugt zur Messung von isothermen Zustandsänderungen eignen. Die Vakuumpumpe saugt einen Teil der im Vorratsbehälter enthaltenen Luft ab und erzeugt so den Unterdruck im Zwischenbehälter und in den angeschlossenen Leitungsabschnitten. Das durch die Vakuumpumpe abgesaugte Gas muß nicht Luft sein, sondern hängt vom jeweiligen Einsatzzweck und -ort des Geräts ab. Bei einer Inbetriebnahme des Verbrauchers muß nicht erstmalig manuell Flüssigkeit aus dem Tank angesaugt werden, da die Vakuumpumpe diese Aufgabe übernimmt. Der im Zwischenbehälter herrschende Unterdruck wird unter normalen Arbeitsbedingungen zweckmäßigerweise zwischen 0,09 und 0,01 MPa gehalten. Durch die Pegel- oder Volumenmessung kontrolliert sich das Gerät selbst, indem ein Pegelanstieg wie ein Druckanstieg ausgewertet wird.

Der wesentliche Vorteil der genannten Ausführungsformen des erfindungsgemäßen Leitungsüberwachungsgeräts besteht darin, daß durch die Überwachung des Unterdrucks und des Pegelstands ein auftretendes Leck jederzeit festgestellt und signalisiert werden kann. Gleichzeitig kann verhindert werden, daß beim Auftreten eines Lecks eine größere Menge Flüssigkeit aus dem Zwischenbehälter oder den Leitungsabschnitten austritt, da die Vakuumpumpe beim Steigen des Drucks im Zwischenbehälter über das zweite Steuersignal in Betrieb gesetzt wird, um den gewünschten Unterdruck wieder herzustellen, wodurch an einem Leck lediglich Umgebungsluft in den jeweiligen Leitungsabschnitt eingesaugt wird und keine Flüssigkeit auslaufen kann.

Die Messung des Pegelstands und des Drucks und die Ansteuerung der Vakuumpumpe erfolgen zweckmäßigerweise elektronisch. Soweit keine Elektronik zur Verfügung steht, kann bei einer einfach herzustellenden mechanischen Ausführungsform der Flüssigkeitspegelsensor ein Schwimmer und der Drucksensor ein Membranschalter sein.

Das am tankseitigen Ende des ersten Leitungsabschnitts angeordnete Unterdruckventil mit den definierten Schaltwerten ermöglicht die Erzeugung eines definierten Mindest-Unterdrucks im Zwischenbehälter und damit konstanter Alarmbedingungen unabhängig von sonstigen Parametern wie z. B. der Tankfüllhöhe, und ist vor allem dann zweckmäßig, wenn der Tank an einer höheren Position als der Zwischenbehälter stationiert ist. Es verhindert dann im Fall eines Lecks das Auslaufen des Tanks. Bei niedrigerer Anordnung des Tanks läuft bei einem Leck in der Leitung die Flüssigkeit in den Tank zurück.

Eine spezielle Ausführungsform des Leitungsüberwachungsgeräts zeichnet sich durch ein Druckausgleichselement nach Anspruch 5 aus, wobei es besonders vorteilhaft ist, wenn die in Strömungsrichtung hintere Öffnung des Druckausgleichselements im unteren Bereich des Zwischenbehälters in diesen mündet. Unter normalen Arbeitsbedingungen liegt die Öffnung dann unterhalb des Flüssigkeitsspiegels. Durch das Druckausgleichselement eintretendes Gas steigt dann in Form von Blasen in der Flüssigkeit auf, wodurch sich die eintretende Gasmenge leicht kontrollieren läßt. Dieses Druckausgleichselement kann nach Anspruch 6 ein zweites Unterdruckventil sein, welches am Zwischenbehälter angeordnet ist, oder kann nach Anspruch 7 eine Luftdrossel oder ein Atmungsventil sein. Durch ein Unterdruckventil wird der im Zwischenbehälter herrschende Druck nicht zu gering, womit eine zu große Belastung des Zwischenbehälters und der angeschlossenen Leitungsabschnitte vermieden wird, und führen eventuell auftretende Druckschwankungen nicht zum Verlassen des Regelbereichs. Eine Luftdrossel und ein Atmungsventil gestatten beispielsweise die manuelle Einstellung der in den Zwischenbehälter einströmenden Gasmenge. Die Vakuumpumpe hält aufgrund ihrer im Vergleich zur Drossel höheren Kapazität den Unterdruck durch stetigen oder intermittierenden Lauf aufrecht.

In Übereinstimmung mit dem Stand der Technik kann zwischen der Ansaugöffnung der Vakuumpumpe und dem Zwischenbehälter ein Schwimmerventil eingesetzt sein. Diese Maßnahme dient dem Schutz der Vakuumpumpe und der Verhinderung des Auslaufens von Flüssigkeit über die Vakuumpumpe bei einem Störungsfall des Leitungsüberwachungsgeräts. Alternativ oder zusätzlich kann die Ausstoßöffnung der Vakuumpumpe über eine Auspuffleitung in den Tank münden und sich so ein geschlossener Kreislauf ergeben, d. h. auch die abgesaugten Dämpfe der Flüssigkeit werden in den Tank zurückgeführt, wodurch eine Umweltbelastung vermieden wird. Die Auspuffleitung kann auch mit der vorderen Öffnung des Druckausgleichselements verbunden sein. Damit ist auch über diesen Gaseintrittsweg ein geschlossener Kreislauf hergestellt, wodurch vermieden wird, daß über das Druckausgleichselement verschmutztes Gas angesaugt wird, was zum Verstopfen dieses Elements führen könnte.

Bei der Anwendung der Erfindung in Verbindung mit einem ölbrenner stehen dem Verbraucher eine Hin- und Rücklaufleitung zur Verfügung, wie es für derzeitig eingesetzte Ölbrenner erforderlich ist, die Rücklaufleitung muß aber im Gegensatz zum Stand der Technik nicht zurück zum Tank geführt sein. Durch die Anordnung des Zwischenbehälters in der Nähe des Verbrauchers genügen kurze zweite und dritte Leitungsabschnitte, da eine Verlegung einer Flüssigkeitsrückleitung vom Verbraucher bis zum Tank nicht erforderlich ist. Der zweite und der dritte Leitungsabschnitt werden ebenfalls vom Leitungsüberwachungsgerät überwacht.

Sofern der über dem Flüssigkeitsspiegel im Zwischenbehälter verbleibende Raum pneumatisch mit einem Manometer verbunden ist, welches den Druck der Luftblase anzeigt, ist eine visuelle Kontrolle der Betriebsparameter direkt am Gerät möglich.

Weitere Vorteile, Einzelheiten und Weiterbildungen der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung einer ersten Ausführungsform des Leitungsüberwachungsgeräts;
- Fig. 2: eine schematische Darstellung einer zweiten Ausführungsform des Leitungsüberwachungsgeräts;

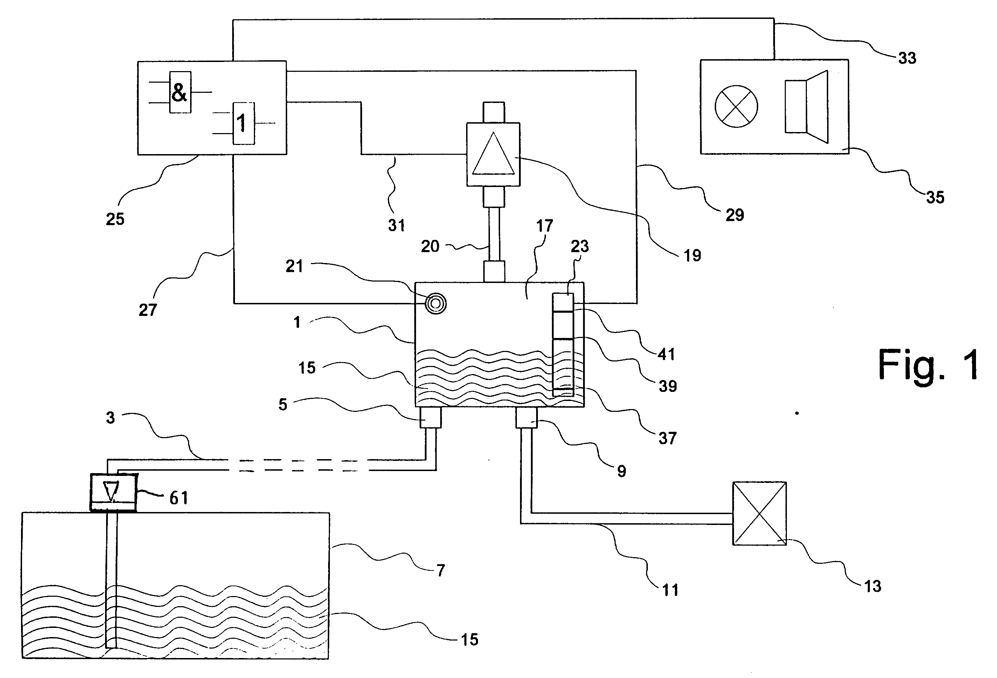

In der Fig. 1 ist eine erste Ausführungsform des Leitungsüberwachungsgeräts schematisch dargestellt. Von einem Zwischenbehälter 1 führen ein erster Leitungsabschnitt 3 ausgehend von einer Eingangsöffnung 5 zu einem Tank 7, und ausgehend von einer Ausgangsöffnung 9, ein zweiter Leitungsabschnitt 11 zu einem Verbraucher 13. Im Tank 7, in den Leitungsabschnitten 3 und 11 und im unteren Bereich des Zwischenbehälters 1 befindet sich eine Flüssigkeit 15. Der verbleibende Raum im zwischenbehälter 1 ist im wesentlichen durch eine Luftblase 17 ausgefüllt. Der Ansauganschluß einer Vakuumpumpe 19 ist über eine Ansaugleitung 20 mit dem Raum des Zwischenbehälters 1, der von der Luftblase 17 ausgefüllt ist, verbunden. Weiterhin befinden sich im Zwischenbehälter 1 ein Drucksensor 21, der den Druck der Luftblase 17 mißt, und ein Flüssigkeitspegelsensor 23, der den Pegel der Flüssigkeit 15 im Zwischenbehälters 1 mißt. Der Zwischenbehälter 1, welcher über die Öffnungen 5 und 9 mit den Leitungsabschnitten 3 bzw. 11 und über die Leitung 20 mit der Pumpe 19 verbunden ist, stellt im übrigen einen luftdicht abgeschlossenen Raum dar.

Eine Verknüpfungslogik 25 empfängt eine erste Signalleitung 27 vom Drucksensor 21 und eine zweite Signalleitung 29 vom Pegelsensor 23. Die Verknüpfungslogik 25 generiert Steuersignale und sendet diese über eine dritte Signalleitung 31 zur Vakuumpumpe 19 und über eine vierte Signalleitung 33 zu einer Alarmeinheit 35. Der Pegelsensor 23 umfaßt wenigstens drei Schaltpunkte, von denen ein erster Schaltpunkt 37 einen minimalen Flüssigkeitspegel, ein zweiter Schaltpunkt 39 einen Normalpegel und ein dritter Schaltpunkt 41 einen maximalen Flüssigkeitspegel signalisieren.

Am tankseitigen Ende des ersten Leitungsabschnitts 3 befindet sich ein Unterdruckventil 61, das gemäß der eingezeichneten Stellung einen Rückfluß in den Tank ermöglicht, einen Ausfluß aus dem Tank jedoch nur in einem gegebenen Druckdifferenzintervall erlaubt. Bei der vorliegenden Anordnung, bei der der Tank 7 niedriger liegt als der Zwischenbehälter 1, erfüllt das Unterdruckventil 61 am tankseitigen Ende des ersten Leitungsabschnitts 3 den Zweck, einen definierten Mindest-Unterdruck im Zwischenbehälter erzeugen zu können.

Im folgenden wird die prinzipielle Funktionsweise des Leitungsüberwachungsgeräts beschrieben. Nach dem Herstellen der Verbindungen zwischen dem Tank 7, dem Zwischenbehälter 1, der Vakuumpumpe 19 und dem Verbraucher 13 befindet sich unter der Voraussetzung, daß der Tank 7 vollständig unterhalb des Zwischenbehälters 1 stationiert ist, weder in den Leitungsabschnitten 3, 11 noch im Zwischenbehälter 1 Flüssigkeit 15. Für eine ordnungsgemäße Arbeitsweise des Leitungsüberwachungsgeräts ist es erforderlich, daß am verbraucherseitigen Ende des zweiten Leitungsabschnitts 11 keine Luft ins System eindringen kann. Gegebenenfalls muß an dieser Stelle ein geeignetes Ventil angeordnet werden.

In diesem Anfangszustand signalisieren der Drucksensor 21 Außendruck und der Pegelsensor 23 minimalen Flüssigkeitspegel an die Verknüpfungslogik 25. Aufgrund der vom Drucksensor 21 und vom Pegelsensor 23 signalisierten Zustände erzeugt die Verknüpfungslogik 25 ein erstes Steuersignal, das über die dritte Signalleitung 31 an die Vakuumpumpe 19 geliefert wird und diese in Betrieb setzt. Weiterhin liefert die Verknüpfungslogik 25 ein zweites Steuersignal, welches über die vierte Signalleitung 33 an die Alarmeinheit 35 geliefert wird, wodurch diese ein Alarmsignal abgibt.

Sobald die Vakuumpumpe 19 arbeitet, saugt sie über die Ansaugleitung 20 einen Teil der Luftblase 17 aus dem Zwischenbehälter 1 ab. Dadurch verringert sich dort der Druck, und es wird nach dem Schalten des Ventils 61 über den ersten Leitungsabschnitt 3 und das Ventil 61 Flüssigkeit 15 aus dem Tank 7 angesaugt, bis sie durch die Eingangsöffnung 5 in den unteren Bereich des Zwischenbehälters 1 eintritt. Bei weiter abnehmendem Druck im Zwischenbehälter 1 steigt dort der Pegel der Flüssigkeit weiter an, bis der erste Schaltpunkt 37 des Pegelsensors 23 erreicht wird. Der Pegelsensor 23 gibt ein entsprechendes Signal an die Verknüpfungslogik 25 ab, und diese generiert unter der Bedingung, daß der Drucksensor 21 ebenfalls ein Signal an die Verknüpfungslogik 25 geliefert hat, welches das Erreichen eines definierten Unterdrucks widerspiegelt, ein Signal, welches an die Alarmeinheit 35 übergegeben wird, um den Alarm auszuschalten.

Der Drucksensor 21 ist dazu in Abhängigkeit vom höhenunterschied-abhängigen Druck zwischen dem Tank 7 und dem Zwischenbehälter 1 so kalibriert, daß ein den Alarm abschaltendes Signal abgegeben wird, wenn der Unterdruck im Zwischenbehälter 1 einen Wert erreicht, der ausreicht, um die Flüssigkeit 15 aus dem Tank 7 in den Zwischenbehälter 1 bis zu einem bestimmten Pegelstand einzusaugen, der etwa dem Pegel des ersten Schaltpunkts 37 entspricht.

Vorerst arbeitet die Vakuumpumpe 19 weiter, wodurch der Pegel im Zwischenbehälter 1 weiter ansteigt, bis der zweite Schaltpunkt 39 des Pegelsensors 23 den Normalpegel signalisiert, wodurch die Verknüpfungslogik 25 ein die Vakuumpumpe 19 abschaltendes Signal generiert, wiederum jedoch nur unter der Bedingung, daß der Drucksensor 21 zumindest einen niedrigeren Druck signalisiert, als beim minimalen Pegelstand.

Im Zwischenbehälter 1 befindet sich jetzt genügend Flüssigkeit 15, damit der Verbraucher 13 über den zweiten Leitungsabschnitt 11 mit der Flüssigkeit 15 versorgt werden kann. Dazu ist es erforderlich, daß der Verbraucher 13 die Flüssigkeit 15 ansaugt, da auf Grund des im Zwischenbehälters 1 herrschenden Unterdrucks die Flüssigkeit 15 nicht selbsttätig durch den zweiten Leitungsabschnitt 11 in Richtung zum Verbraucher 13 fließen kann. Die Vakuumpumpe 19 arbeitet vorerst nicht und die Alarmeinheit 35 gibt kein Alarmsignal ab. Sobald jedoch der Pegel unter den zweiten Schaltpunkt 39 des Pegelsensors 23 abfällt, erzeugt die Verknüpfungslogik 25 ein Signal, welches die Vakuumpumpe 19 erneut in Betrieb setzt.

Bei einer geringfügig anderen Kalibrierung des Drucksensors 21 ist es auch möglich, daß beim ersten Absaugen der Luftblase 17 aus dem Zwischenbehälter 1 der Pegel der Flüssigkeit 15 auf eine bestimmte Höhe über den zweiten Schaltpunkt 39 ansteigt und der Drucksensor 21 erst dann das Signal zum Abschalten der Vakuumpumpe an die Verknüpfungslogik 25 liefert. Entnimmt der Verbraucher 13 im folgenden dem Zwischenbehälter 1 eine bestimmte Menge an Flüssigkeit 15, so bewirkt dies noch kein erneutes Einschalten der Vakuumpumpe 19. Unter der Voraussetzung, daß das System völlig dicht ist und keine Luft von außen eindringen kann, wird beim Absinken des Pegels im Zwischenbehälter 1 automatisch Flüssigkeit 15 aus dem Tank 7 nach-gesaugt. Die Vakuumpumpe 19 läuft dann unter Normalbedingungen nicht mehr.

Sobald in den Leitungsabschnitten 3, 11 oder im Zwischenbehälter 1 ein Leck auftritt, aus dem Flüssigkeit 15 auslaufen könnte, steigt der Druck im Zwischenbehälter 1 an, was durch den Drucksensor 21 erfaßt und an die Verknüpfungslogik 25 signalisiert wird, die daraufhin die Vakuumpumpe 19 in Betrieb setzt. Unabhängig davon, ob der Pegel der Flüssigkeit bereits unter den zweiten Schaltpunkt 39 des Pegelsensors 23 abgefallen ist, arbeitet jetzt die Vakuumpumpe 19 und versucht, den Unterdruck im Zwischenbehälter 1 auf den definierten Wert einzustellen. Daher wird an dem entstandenen Leck Luft oder sonstiges Umgebungsmedium eingesaugt, wodurch das Auslaufen von Flüssigkeit 15 verhindert wird. Bei geringfügigen Undichtigkeiten ist die Vakuumpumpe 19 dauerhaft in der Lage, eine ausreichende Menge der Luftblase 17 abzusaugen, wodurch der definierte Unterdruck eingehalten wird. In diesem Fall kommt es nicht zur Auslösung eines Alarms. Steigt der Druck im Zwischenbehälter 1 jedoch weiter an, d. h. die Vakuumpumpe 19 kann nicht genügend Luft absaugen, um das durch das Leck erfolgende Nachströmen des Gases auszugleichen, so liefert der Drucksensor 21 ein entsprechendes Signal an die Verknüpfungslogik 25, die ihrerseits ein Signal für die Alarmeinheit 35 generiert, um einen Alarm auszulösen.

Befindet sich das Leck im ersten Leitungsabschnitt 3, so wird die Flüssigkeit 15, die sich auf der dem Zwischenbehälter 1 zugewandten Seite des ersten Leitungsabschnitts - vom Leck aus gesehen - befindet, in den Zwischenbehälter eingesaugt und kann von dort aus dem Verbraucher 13 zugeführt werden, der sie verbraucht. Der Teil der Flüssigkeit 15, der sich in dem dem Tank 7 zugewandten Bereich des ersten Leitungsabschnitts 3 - vom Leck aus gesehen - befindet, läuft aufgrund der Schwerkraft zurück in den Tank. Damit die Flüssigkeit 15 ungehindert in den Tank 7 zurücklaufen kann, darf am Ende des Ansaugstutzens, welcher sich in den Tank erstreckt und mit dem ersten Leitungsabschnitt 3 verbunden ist, kein Fußventil (d.h. kein Rückschlagventil) angeordnet sein. Aus dem Leck tritt daher keine Flüssigkeit aus. Befindet sich demgegenüber das Leck im zweiten Leitungsabschnitt 11, so wird die Flüssigkeit einerseits in den Zwischenbehälter zurückgesaugt und andererseits vom Verbraucher verbraucht. Da der Zwischenbehälter 1 oberhalb des Verbrauchers 13 stationiert ist, kann auch hier keine Flüssigkeit aus dem Leck austreten. Läßt sich der Zwischenbehälter 1 nur unterhalb des Verbrauchers 13 stationieren, so ist der zweite Leitungsabschnitt 11 aber viel kürzer als der erste Leitungsabschnitt 3. Die möglicherweise aus dem zweiten Leitungsabschnitt 11 austretende Menge an Flüssigkeit 15 ist in jedem Fall sehr gering.

Sofern der Drucksensor 21 defekt ist und der Verknüpfungslogik 25 signalisiert, daß die Vakuumpumpe 19 in Betrieb zu setzen ist, wird der Druck im Zwischenbehälter 1 durch das Arbeiten der Vakuumpumpe 19 weiter abgesenkt, obwohl dies nicht erforderlich ist. Der Pegel im Zwischenbehälter steigt weiter, bis er den dritten Schaltpunkt 41 des Pegelsensors 23 erreicht. Dann signalisiert der Pegelsensor 23 an die Verknüpfungslogik 25 einen zu hohen Pegelstand. Die Verknüpfungslogik 25 generiert infolgedessen ein Signal, welches die Vakuumpumpe 19 ausschaltet, und gleichzeitig ein Signal, welches die Alarmeinheit 35 betätigt, um dem Kontrollpersonal anzuzeigen, daß eine Störung des Leitungsüberwachungsgeräts vorliegt. Unter diesen Umständen kann der Verbraucher 13 vorerst ungestört weiterarbeiten.

Die beschriebene Ausführungsform des Leitungsüberwachungsgeräts gewährleistet also die Überwachung der Leitungsabschnitte und des Zwischenbehälters, wobei sich die beiden Sensoren 21, 23 gegenseitig in ihrer Funktionsfähigkeit kontrollieren. Der Aufbau der Verknüpfungslogik 25 folgt allgemein bekannten Regeln der Steuerungs- und Schaltungstechnik und wird daher nicht näher beschrieben. Insbesondere entspricht es den heutigen Gegebenheiten, die Steuerung soweit als möglich elektronisch auszuführen. Die Aufgabe der Überwachung der Leitungsabschnitte kann das Leitungsüberwachungsgerät auch bei der Verwendung eines einzigen Sensors erfüllen.

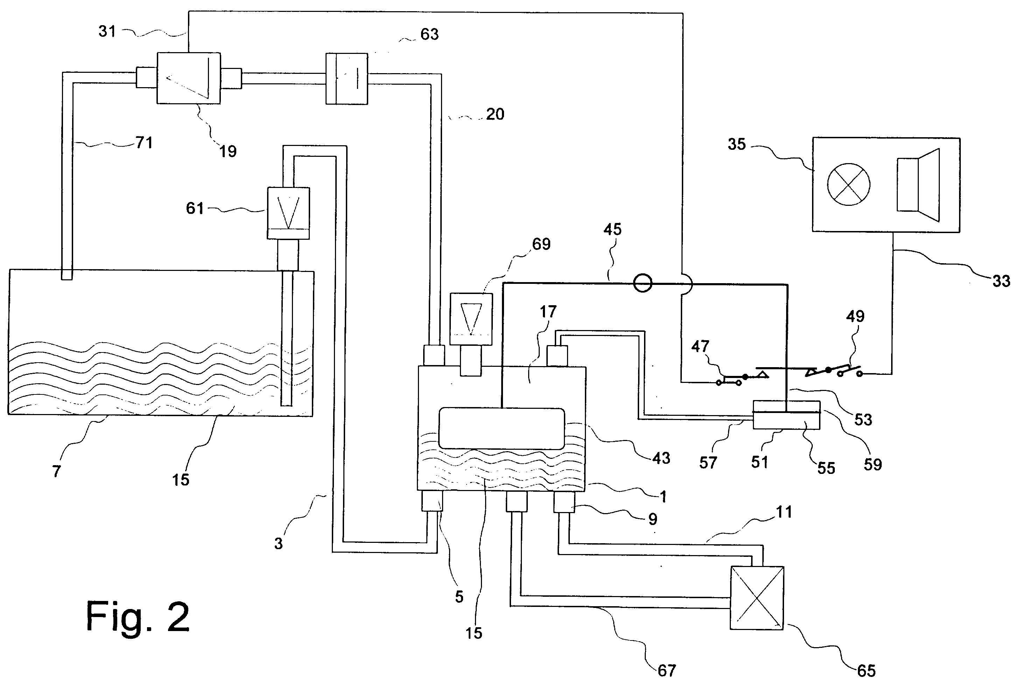

In der Fig. 2 ist eine zweite Ausführungsform des Leitungsüberwachungsgerätes schematisch dargestellt. Insbesondere ist diese zweite Ausführungsform für den Einsatz an einem Ölbrenner als Verbraucher vorgesehen. Gleiche Elemente der beiden Ausführungsformen sind mit gleichen Bezugsziffern bezeichnet. Das allgemeine Funktionsprinzip entspricht dem der ersten Ausführungsform und wird daher nicht mehr im Detail erläutert. In der Figur ist eine mechanische Steuerung dargestellt, die die Funktionsweise leicht veranschaulicht. An sich wird auch hierbei eine elektronische Steuerung bevorzugt.

Ein Schwimmer 43 stellt den Pegelsensor dar. Der Schwimmer 43 ist über ein Hebelsystem 45 mit einem ersten Schaltelement 47 und einem zweiten Schaltelement 49 verbunden. Den Drucksensor bildet ein Membranschalter 51, der über eine Verbindungsstange 53 auf das Hebelsystem 45 wirkt. Eine Druckkammer 55 des Membranschalters 51 ist über eine Druckausgleichsleitung 57 mit dem Raum des Vorratsbehälters 1 verbunden, in dem die Luftblase 17 ist. Die Druckkammer 55 wird durch eine Membran 59 begrenzt, die andererseits mit der Verbindungsstange 53 verbunden ist. Sofern im Zwischenbehälter 1 und damit auch in der Druckkammer 55 Unterdruck herrscht, wirkt auf die den Deckel der Druckkammer 55 bildende Membran 59 eine die Membran 59 nach innen wölbende Kraft, die über die Verbindungsstange 53 und das Hebelsystem 45 an den Schwimmer 43 in Richtung seiner Auftriebskraft geleitet wird.

Der dargestellte Zustand entspricht dem Zustand, in welchem die Vakuumpumpe 19 arbeitet, da das erste Schaltelement 47 in Arbeitsstellung ist, und die Alarmeinheit 35 keinen Alarm liefert, da das zweite Schaltelement 49 in Ruhestellung ist. Betätigt werden die Schaltelemente 47, 49 durch die vertikale Bewegung des Hebelsystems 45, die durch die vertikale Bewegung des Schwimmers 43 hervorgerufen wird. Es ist zu erkennen, daß die Verbindungsstange 53 mit der Membran 59 verbunden ist, wodurch die bereits beschriebenen Einwirkungen des im Zwischenbehälters 1 vorhandenen Drucks auf das Hebelsystem 45 resultieren.

Die Verbindung des Schwimmers 43 mit dem Membranschalter 51 über das Hebelsystem 45 und die Anordnung der Schaltelemente 47, 49 erfüllen durch die Anwendung mechanischer und pneumatischer Funktionsweisen die Aufgabe der in der Fig. 1 gezeigten Verknüpfungslogik 25 der ersten Ausführungsform.

Insbesondere dann, wenn die Steuerung elektronisch implementiert ist, kann als Größe, die in die Steuerung einfließt, auch der Pegel im Tank 7 mitverwendet werden. Hierzu weist auch der Tank 7 einen - nicht dargestellten - Pegelfühler auf, der auch gleich eine Ölstandsanzeige liefert. Bei vollem Tank braucht man aufgrund der anderen Höhendifferenz eine andere Kraft und damit einen anderen Unterdruck im Zwischenbehälter 1, als bei fast leerem Tank. Diese zusätzliche Eingangsgröße kann auch beim Ausführungsbeispiel nach Fig. 1 vorgesehen werden.

Am tankseitigen Ende des ersten Leitungsabschnitts 3 befindet sich das Unterdruckventil 61. Der Tank 7 ist im gezeigten Beispiel höher als der Zwischenbehälter 1 stationiert, wodurch im Fall eines Lecks im ersten Leitungsabschnitt 3 Flüssigkeit 15 selbständig aus dem Tank 7 auslaufen könnte, was jedoch durch das Unterdruckventil 61 verhindert wird. Dieses öffnet nur dann, wenn ein ausreichender Unterdruck im Zwischenbehälter 1 durch die Vakuumpumpe 19 erzeugt wurde. Andererseits ist das Unterdruckventil 61 so dimensioniert, daß es auch bei vollständig gefülltem Tank 7 nicht selbsttätig öffnet, wenn kein ausreichender Unterdruck im Zwischenbehälter 1 vorhanden ist bzw. wenn ein größeres Leck im ersten Leitungsabschnitt 3 auftritt, und ist so angeordnet, daß zwischen ihm und dem Tank 7 keine Senke im Leitungsabschnitt liegt, in der Flüssigkeit stehen könnte, die im Falle eines Lecks auslaufen könnte.

Bei der in Fig. 2 gezeigten Ausführungsform ist zwischen der Ansaugöffnung der Vakuumpumpe 19 und dem Zwischenbehälter 1, also in der Ansaugleitung 20, ein Schwimmerventil 63 eingeschaltet. Sofern bei einer Fehlfunktion des Geräts der Pegel im Zwischenbehälter 1 zu weit ansteigt, saugt die Vakuumpumpe 19 Flüssigkeit 15 in das Schwimmerventil 63 ein, noch bevor Flüssigkeit in die Druckausgleichsleitung 57 eindringen kann. Die in das Schwimmerventil 63 eingesaugte Flüssigkeit schließt das Schwimmerventil 63 und damit die Verbindung zwischen der Vakuumpumpe 19 und dem Zwischenbehälter 1, wodurch keine weitere Flüssigkeit in den Zwischenbehälter eingesaugt wird und der Pegel nicht weiter ansteigt. Das Schwimmerventil 63 kann mit einem weiteren nicht dargestellten Schaltelement kombiniert werden, um beispielsweise Alarm auszulösen oder die Vakuumpumpe abzuschalten.

In der Ausführungsform von Fig. 2 wird der Verbraucher durch eine Saugpumpe 65 eines Ölbrenners gebildet. Solche an sich bekannten Saugpumpen benötigen zur sicheren Arbeitsweise eine Ansaugleitung und eine Rücklaufleitung. Der zweite Leitungsabschnitt 11 bildet die Ansaugleitung für die Saugpumpe 65, und ein dritter Leitungsabschnitt 67 erfüllt die Funktion der Rücklaufleitung. Er mündet ebenfalls in den Zwischenbehälter 1. In ihm herrschen daher gleiche Druckverhältnisse wie in den Leitungsabschnitten 3 und 11, wodurch auch die Überwachung des dritten Leitungsabschnitts 67 sichergestellt ist.

Als zusätzliches Element ist am Zwischenbehälter 1 ein Druckausgleichselement in Form eines zweiten Unterdruckventils 69 angebracht. Die in Strömungsrichtung hintere öffnung dieses Unterdruckventils 69 erstreckt sich in den Bereich der Luftblase 17. Seine Schließkraft ist einerseits kleiner als die Druckkraft, die aus der Druckdifferenz zwischen dem Außendruck und dem Unterdruck im Zwischenbehälter 1 im Falle der maximalen Saugleistung der Vakuumpumpe 19 resultiert. Andererseits ist die Schließkraft größer als die resultierende Druckkraft, die unter normalen Arbeitsbedingungen des Leitungsüberwachungsgeräts auftritt. Das zweite Unterdruckventil 69 dient der Verhinderung des Verlassens des Regelbereichs aufgrund äußerer Einflüsse oder kurzzeitiger Fehlfunktionen einzelner Elemente. Über es kann Außenluft in den Zwischenbehälter 1 einströmen, wenn der darin herrschende Druck zu gering ist. Das Unterdruckventil 69 kann auch durch eine Luftdrossel oder ein Atmungsventil ersetzt sein, in diesem Fall hält im stationären Arbeitszustand einerseits die Vakuumpumpe 19 und andererseits die Luftdrossel den Druck der Luftblase 17 im Gleichgewicht. Bei dieser Ausführungsform springt die Vakuumpumpe 19 auch im Ruhezustand immer wieder an, im Gegensatz zur Ausführungsform, bei der der Vorratsbehälter völlig dicht abgeschlossen ist.

Die Ausgangsöffnung der Vakuumpumpe 19 ist mit einer Auspuffleitung 71 verbunden, die ihrerseits in den Tank 7 zurückgeführt ist. Dies verhindert einerseits, daß die abgesaugten Dämpfe in die Umwelt abgegeben werden, und ergibt andererseits eine zusätzliche Sicherheit, damit im Havariefall keine Flüssigkeit in die Umgebung gepumpt wird.

Bei einer nicht dargestellten Ausführungsform ist der Ansaugeingang der am Zwischenbehälter angeordneten Luftdrossel mit der Auspuffleitung verbunden. Somit ist sichergestellt, daß keine Schmutzpartikel in die Luftdrossel eindringen können, was zu Verstopfungen führen könnte.

Bei weiteren nicht dargestellten Ausführungsformen können mehrere Verbraucher an einem gemeinsamen Zwischenbehälter angeschlossen werden, wobei sämtliche angeschlossenen Leitungsabschnitte über die Kontrolle des im Zwischenbehälter erzeugten Unterdrucks überwacht werden. Da alle angeschlossenen Leitungsabschnitte überwacht werden, können von einem gemeinsamen Zwischenbehälter, welcher an einer zentralen Stelle plaziert ist, eine größere Anzahl von Verbrauchern versorgt werden, die sich in größerem Abstand voneinander befinden können. Andererseits ist es auch möglich, mehrere erfindungsgemäße Leitungsüberwachungsgeräte parallel an einen Tank anzuschließen, wobei jeder einzelne Verbraucher ein eigenes Überwachungsgerät besitzt. Zur Erfassung der Meßwerte sind die unterschiedlichsten Drucksensoren und Pegel sensoren geeignet.

## Patentansprüche

1. Leitungsüberwachungsgerät für flüssigkeitsführende Leitungen, die von einem mit Flüssigkeit (15) gefüllten Tank (7) zu einem Verbraucher (13, 65) führen, mit: einer Alarmeinheit (35) zur Signalisierung eines Lecks in den Leitungen oder einer Fehlfunktion des Leitungsüberwachungsgeräts; einer Meßeinrichtung, die das Leck feststellt und ein erstes Steuersignal an die Alarmeinheit (35) liefert; einem im wesentlichen geschlossenen Zwischenbehälter (1) für die Flüssigkeit (15), an dessen Eingangsöffnung (5) ein zum Tank (7) führender erster Leitungsabschnitt (3) und an dessen Ausgangsöffnung (9) ein zum Verbraucher (13, 65) führender zweiter Leitungsabschnitt (11) angeschlossen sind; einem Ventil (61) im Bereich des tankseitigen Endes des ersten Leitungsabschnitts (3) und einer Vakuumpumpe (19), deren Ansauganschluß im über dem Flüssigkeitsspiegel verbleibenden Raum, der von einer Luftblase (17) ausgefüllt ist, des Zwischenbehälters (1) liegt; wobei die Meßeinrichtung (21, 23) eine Einrichtung zur Ermittlung einer Druck- und/oder Volumen-Zustandsänderung der Luftblase (17) im Zwischenbehälter (1) ist und in Abhängigkeit vom Zustand der Luftblase (17) ein Steuersignal an die Vakuumpumpe (19) zur Gegensteuerung gegen die Zustandsänderung liefert, dadurch gekennzeichnet, daß das Ventil im Bereich des tankseitigen Endes des ersten Leitungsabschnitts (3) in Richtung zum Zwischenbehälter ein Unterdruckventil (61) ist, dessen Schließkraft einerseits größer ist als die sich aus dem statischen Druck, der allein aus dem gegebenenfalls vorhandenen Höhenunterschied zwischen Tank (7) und Zwischenbehälter (1) entsteht, ergebende Druckkraft in Richtung zum Zwischenbehälter (1) und andererseits kleiner ist als die sich aus der Summe aller statischen Drücke, die im Leitungssystem auftreten, ergebende Druckkraft im Fall der maximalen Saugleistung der Vakuumpumpe (19).

2. Leitungsüberwachungsgerät für flüssigkeitsführende Leitungen, die von einem mit Flüssigkeit (15) gefüllten Tank (7) zu einem Verbraucher (13, 65) führen, mit: einer Alarmeinheit (35) zur Signalisierung eines Lecks in den Leitungen oder einer Fehlfunktion des Leitungsüberwachungsgeräts; einer Meßeinrichtung, die das Leck feststellt und ein erstes Steuersignal an die Alarmeinheit (35) liefert; einem im wesentlichen geschlossenen Zwischenbehälter (1) für die Flüssigkeit (15), an dessen Eingangsöffnung (5) ein zum Tank (7) führender erster Leitungsabschnitt (3) und an dessen Ausgangsöffnung (9) ein zum Verbraucher (13, 65) führender zweiter Leitungsabschnitt (11) angeschlossen sind; und einer Vakuumpumpe (19), deren Ansauganschluß im über dem Flüssigkeitsspiegel verbleibenden Raum, der von einer Luftblase (17) ausgefüllt ist, des Zwischenbehälters (1) liegt; wobei die Meßeinrichtung (21, 23) eine zur Ermittlung einer Druckänderung der Luftblase (17) im Zwischenbehälter (1) ist und in Abhängigkeit vom Zustand der Luftblase (17) ein Steuersignal an die Vakuumpumpe (19) zur Gegensteuerung gegen die Zustandsänderung liefert, insbesondere nach Anspruch 1, dadurch gekennzeichnet, daß die Meßeinrichtung außer einem Drucksensor (21), der eine Druckänderung der Luftblase (17) feststellt, auch einen Flüssigkeitspegelsensor (23), der eine Änderung der Menge der im Zwischenbehälter (1) vorhandenen Flüssigkeit (15) feststellt, umfaßt.

3. Leitungsüberwachungsgerät nach Anspruch 1 oder 2, dadurch gekennzeichnet, daß die Meßeinrichtung (21, 23) elektronisch im wesentlichen ohne bewegliche Teile arbeitet.

4. Leitungsüberwachungsgerät nach Anspruch 2, dadurch gekennzeichnet, daß der Flüssigkeitspegelsensor ein Schwimmer (43) ist, der über ein Hebelsystem (45) mit Schaltelementen (47, 49) zur Erzeugung des ersten und zweiten Steuersignals verbunden ist, und daß der Drucksensor ein Membranschalter (51) ist, der eine der Druckdifferenz zwischen Außendruck und Unterdruck im Zwischenbehälter (1) proportionale, in Richtung der Auftriebskraft des Schwimmers (43) auf diesen über das Hebelsystem (45) wirkende Kraft ausübt.

5. Leitungsüberwachungsgerät nach einem der Ansprüche 1 bis 4, gekennzeichnet durch ein Druckausgleichselement (69), das in den Zwischenbehälter (1) mündet und das zu öffnen ist, um Gas in den Zwischenbehälter (1) einströmen zu lassen.

6. Leitungsüberwachungsgerät nach Anspruch 5, dadurch gekennzeichnet, daß das Druckausgleichselement ein zweites Unterdruckventil (69) ist, dessen Schließkraft kleiner ist als die Druckkraft, die aus der Druckdifferenz zwischen Außendruck und Unterdruck im Zwischenbehälter (1) bei maximaler Saugleistung der Vakuumpumpe (19) resultiert, und größer ist als die resultierende Druckkraft, die in einem Normalarbeitszustand vorliegt.

7. Leitungsüberwachungsgerät nach Anspruch 5, dadurch gekennzeichnet, daß das Druckausgleichselement eine Luftdrossel oder ein Atmungsventil ist.

8. Leitungsüberwachungsgerät nach einem der Ansprüche 1 bis 7, dadurch gekennzeichnet, daß die Ausstoßöffnung der Vakuumpumpe (19) über eine Auspuffleitung (71) in den Tank (7) mündet.

9. Leitungsüberwachungsgerät nach dem auf einen der Ansprüche 5 bis 7 rückbezogenen Anspruch 8, dadurch gekennzeichnet, daß das Druckausgleichselement auf seiner dem Zwischenbehälter (1) abgewandten Seite mit der Auspuffleitung (71) verbunden ist.

10. Leitungsüberwachungsgerät nach einem der Ansprüche 1 bis 9, dadurch gekennzeichnet, daß der im Zwischenbehälter (1) durch die Vakuumpumpe (19) erzeugte Unterdruck unter normalen Arbeitsbedingungen zwischen 0,09 und 0,01 MPa liegt.

## Claims

1. Pipe monitoring device for fluid-carrying pipes leading from a tank (7) filled with fluid (15) to a consumer (13, 65), with: an alarm unit for warning about pipe leakages or a malfunction of the pipe monitoring device; a reading device, which detects the leak and delivers an initial control signal to the alarm unit (35); an essentially closed intermediate container (1) for the fluid (15), which has a first pipe section (3) leading to the tank (7) at its input opening, and a second pipe section (11) leading to the consumer (13, 65) at its output opening; a valve (61) in the vicinity of the end turned towards the tank of the first pipe section (3) and a vacuum pump (19), the suction port of which is situated in the space above the fluid level filled by an air pocket (17) of the intermediate container, whereby the reading device (21, 23) has the function of determining the pressure fluctuation and/or any alteration in the volume of the air pocket (17) in the intermediate container (1), which then, dependent on the situation of the air pocket (17), sends a control signal to the vacuum pump (19) to counteract any volume alteration, characterized in that the valve in the vicinity of the end turned towards the tank of the first pipe section (3) in the direction to the intermediate container is a reduced-pressure valve (61), the closing force of which is on the one hand greater than the pressure force in the direction of the intermediate container created by the static pressure, which only arises as a result of the level difference between the tank (7) and the intermediate container (1); and is on the other hand lower than the pressure force in case of the pipe system maximum suction capacity of the vacuum pump (19), created by the sum of all statistic pressures occurring in the pipe system.

2. Pipe monitoring device for fluid-carrying pipes leading from a tank (7) filled with fluid (15) to a consumer (13, 65), with: an alarm unit for warning about pipe leakages or a malfunction of the pipe monitoring device; a reading device, which detects the leak and delivers an initial control signal to the alarm unit (35); an essentially closed intermediate container (1) for the fluid (15), which has a first pipe section (3) leading to the tank (7) at its input opening, and a second pipe section (11) leading to the consumer (13, 65) at its output opening; a vacuum pump (19), the suction port of which is situated in the space above the fluid level filled by an air pocket (17) of the intermediate container, whereby the reading device (21, 23) has the function of determining the pressure fluctuation of the air pocket (17) in the intermediate container (1), which then, dependent on the situation of the air pocket (17), sends a control signal to the vacuum pump (19) to counteract any volume alteration, in particular according to claim 1, characterized in that the reading device, in addition to a pressure sensor (21) which detects an alteration in the pressure of the air pocket (17), also comprises a fluid level sensor (23) which detects any alteration in the quantity of the fluid (15) in the intermediate container (1).

3. Pipe monitoring device in accordance with claims 1 or 2, characterized in that the reading device (21, 23) functions electronically and essentially with no moving parts.

4. Pipe monitoring device in accordance with claim 2, characterized in that the fluid level sensor is a float gauge (43) which is connected to contact elements (47, 49) via a lever arrangement (45) with the purpose of initiating the first and second control signals, and by the fact that the pressure sensor is a diaphragm switch (51), which exerts force, via the lever arrangement (45), proportional to the pressure difference between the outer pressure and reduced pressure in the intermediate container (1), on, and in the direction of the buoyant force of the float gauge (43).

5. Pipe monitoring device in accordance with one of claims 1 to 4, characterized by a pressure equalisation element (69) which discharges into the intermediate container (1), and which can be opened to allow gas to flow into the intermediate container (1).

6. Pipe monitoring device in accordance with claim 5 characterized in that the pressure equalisation element is a second reduced-pressure valve (69), the closing force of which is less than the pressure force arising from the pressure difference between the outer pressure and reduced pressure in the intermediate container (1) at maximum suction capacity of the vacuum pump (19), and which is greater than the resulting pressure force present under normal working conditions.

7. Pipe monitoring device in accordance with claim 5 characterized in that the fact that the pressure equalisation element is an air-core choke or a vent valve.

8. Pipe monitoring device in accordance with one of claims 1 to 7 characterized in that the vacuum pump expulsion opening discharges into the tank (7) via an exhaust duct (71).

9. Pipe monitoring device in accordance with claim 8 which refers to claims 1 to 7 characterized in that the pressure equalisation element is connected to the exhaust duct (71) on the side facing away from the intermediate container (1).

10. Pipe monitoring device in accordance with one of the claims 1 to 9 characterized in that under normal working conditions the reduced pressure created in the intermediate container (1) by the vacuum pump (19) lies between 0.09 and 0.01 MPa.

## Revendications

1. Appareil de surveillance pour des conduites transportant des liquides d'un réservoir (7) rempli de liquide (15) à un consommateur (13, 65) avec: une unité d'alarme (35) pour signaler la présence d'une fuite dans les conduites ou un dysfonctionnement de l'appareil de surveillance de conduite; un dispositif de mesure qui constate la fuite et fournit un premier signal de commande à l'unité d'alarme (35); un réservoir intermédiaire (1) en grande partie clos pour le liquide (15) auquel une première section de conduite (3) est raccordée à l'ouverture d'entrée (5) du réservoir, cette conduite menant au réservoir (7) et une deuxième section de conduite (11) raccordée à l'ouverture de sortie (9), menant au consommateur (13, 65); une vanne (61) dans la zone de l'extrémité de la première section de conduite (3) côté réservoir et une pompe à dépression (19) dont le raccord d'aspiration se trouve dans l'espace restant au-dessus du niveau de liquide, cet espace du réservoir intermédiaire (1) étant rempli d'une poche d'air (17); le dispositif de mesure (21, 23) étant un dispositif de recherche d'une modification de l'état de pression et/ou de volume de la poche d'air (17) dans le réservoir intermédiaire (1) et qui, en fonction de l'état de la poche d'air (17), envoie un signal de commande à la pompe à dépression (19) pour réagir à la modification de l'état, caractérisé par le fait que la vanne dans la zone de la première section de conduite (3) du côté du réservoir dans la direction du réservoir intermédiaire est un clapet de dépression (61) dont la force de fermeture d'une part est supérieure à la force de pression en direction du réservoir intermédiaire (1), créée à partir de la pression statique simplement du fait de la différence de hauteur éventuelle existant dans le réservoir (7) et le réservoir intermédiaire (1) et d'autre part est inférieure à la force de pression résultant de l'ensemble de toutes les pressions statiques présentes dans le système de conduites dans le cas de l'aspiration maximale de la pompe à dépression (19).

2. Appareil de surveillance pour les conduites transportant des liquides d'un réservoir (7) rempli de liquide (15) à un consommateur final (13, 65) avec: une unité d'alarme (35) pour signaler la présence d'une fuite dans les conduites ou un dysfonctionnement de l'appareil de surveillance de conduite; un dispositif de mesure qui constate la fuite et fournit un premier signal de commande à l unité d'alarme (35); un réservoir intermédiaire (1) en grande partie clos pour le liquide (15) auquel une première section de conduite (3) est raccordée à l'ouverture d'entrée (5) du réservoir, cette conduite menant au réservoir (7) et une deuxième section de conduite (11) raccordée à l'ouverture de sortie (9), menant à le consommateur (13, 65); et une pompe à dépression (19) dont le raccord d'aspiration se trouve dans l'espace restant au-dessus du niveau de liquide, cet espace du réservoir intermédiaire (1) étant rempli d'une poche d'air (17); le dispositif de mesure (21, 23) étant un dispositif de recherche d'une modification de l'état de pression et/ou de volume de la poche d'air (17) dans le réservoir intermédiaire (1) et qui, en fonction de l'état de la poche d'air (17), envoie un signal de commande à la pompe à dépression (19) pour réagir à la modification de l'état, en particulier suivant la revendication 1, caractérisé par le fait que le dispositif de mesure comprend, outre un capteur de pression (21) qui constate une différence de pression de la poche d'air (17) également un capteur de niveau de liquide (23) qui constate une modification de la quantité de liquide (15) se trouvant dans le réservoir intermédiaire (1).

3. Appareil de surveillance de conduite, suivant la revendication 1 ou 2, caractérisé par le fait que le dispositif de mesure (21, 23) fonctionne de façon électronique et essentiellement sans pièces en mouvement.

4. Appareil de surveillance de conduite suivant la revendication 2, caractérisé par le fait que le capteur de niveau de liquide est un flotteur (43) qui est relié par un système de levier (45) à des éléments de commutation (47, 49) pour générer le premier et le deuxième signal de commande et que le capteur de pression est un interrupteur à membrane (51) qui exerce une force sur le flotteur par l'intermédiaire du système de levier, force proportionnelle à la différence de pression entre la pression extérieure et la dépression dans le réservoir intermédiaire (1), dans le sens de la poussée verticale du flotteur (43).

5. Appareil de surveillance de conduite suivant l'une des revendications 1 à 4, caractérisé par un compensateur de pression (69) qui débouche dans le réservoir intermédiaire (1) et qui doit être ouvert pour laisser entrer du gaz dans le réservoir intermédiaire (1).

6. Appareil de surveillance de conduite suivant la revendication 5, caractérisé par le fait que le compensateur de pression est un deuxième clapet de dépression (69) dont la force de fermeture est inférieure à la force de pression résultant de la différence de pression entre la pression extérieure et la dépression dans le réservoir intermédiaire (1) dans le cas de l'aspiration maximale de la pompe à dépression (19), et supérieure à la force de pression qui en résulte et qui est présente en état de fonctionnement normal.

7. Appareil de surveillance de conduite suivant la revendication 5, caractérisé par le fait que le compensateur de pression est une bobine de self à air ou un clapet à échange.

8. Appareil de surveillance de conduite suivant l'une des revendications 1 à 7, caractérisé par le fait que l'ouverture d'éjection de la pompe à dépression (19) débouche dans le réservoir (7) par une conduite d'échappement (71).

9. Appareil de surveillance de conduite suivant une revendication 8 se référant aux revendications 5 à 7, caractérisé par le fait que le compensateur de pression est relié à la conduite d'échappement (71) par son côté opposé au réservoir intermédiaire (1).

10. Appareil de surveillance de conduite suivant l'une des revendications 1 à 9, caractérisé par le fait que la dépression générée dans le réservoir intermédiaire (1) par la pompe à dépression (19) se situe entre 0,09 et 0,01 MPa dans des conditions de fonctionnement normales.
